# EUROPEAN PATENT APPLICATION

(11) **EP 2 698 779 A2**
(43) Date of publication of application: **19.02.2014**
(21) Application number: 13004030.6
(22) Date of filing: 13.08.2013
(51) Int. Cl.: G09B 5/06

(54) **Learning device**

(30) Priority: 14.08.2012 US 201213585309
(71) Applicant: Accenture Global Services Limited, Dublin 4 (IE)
(72) Inventor: Karandikar, Saumitra, 121007 Faridabad (IN); Parthasarathy, Manoj, Houghton, MI 49931 (US); Ramachandran, Rajesh, Austin, TX 78738 (US)
(74) Representative: Müller-Boré & Partner Patentanwälte PartG mbB

(57) **Abstract**

A learning device for facilitating learning by at least one user may include at least one learning map comprising at least one learning nugget. The learning nugget may include learning content associated with the learning map and with a search term for a search performable by a user to access the learning map. The user may interact with the learning map to add the learning map to a user's list of learning maps or contribute to the learning map, and assign a public or private setting to the learning map to respectively allow the user to add the learning map to the user's list of learning maps or contribute to the learning map.

## Description

### BACKGROUND

Learning can be achieved, for example, by searching for and consuming a topic on an information source, such as the internet, and reviewing the search results. However, such search results are typically scattered and unrelated, which can make the learning process challenging and inefficient. A considerable amount of time and effort can also be expended in reviewing search results that are inaccurate, or below or beyond a learner's competency level. A learning procedure can attempt to reduce some inefficiencies related to learning. However, even learning procedures can be inefficient without an objective understanding of learning needs. These and other factors can impact efficiency of a learning endeavor.

### BRIEF DESCRIPTION OF DRAWINGS

Features of the present disclosure are illustrated by way of examples shown in the following figures. In the following figures, like numerals indicate like elements, in which:

Figure 1 illustrates an architecture of a learning device, according to an example of the present disclosure;

Figure 2 illustrates a flowchart for generating a learning map or using an existing learning map, according to an example of the present disclosure;

Figure 3 illustrates a flowchart for subscribing to a learning map, according to an example of the present disclosure;

Figure 4 illustrates a flowchart for modifying a learning map based on public access, according to an example of the present disclosure;

Figure 5 illustrates a flowchart for modifying to a learning map based on private access, according to an example of the present disclosure;

Figure 6 illustrates a flowchart for editing a learning map, according to an example of the present disclosure;

Figure 7 illustrates a user interface display for initiating access to learning maps, according to an example of the present disclosure;

Figure 8 illustrates a user interface display for accessing various learning maps, according to an example of the present disclosure;

Figure 9 illustrates a user interface display for a learning map, according to an example of the present disclosure;

Figure 10 illustrates a method for learning, according to an example of the present disclosure;

Figure 11 illustrates further details of the method for learning, according to an example of the present disclosure; and

Figure 12 illustrates a computer system, according to an example of the present disclosure.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

### 1. Overview

A learning device and method are described herein, and provide a technical solution to the technical problem of learning. The learning device may also be referred to as a learning management system, and the learning method may also be referred to as a method for learning management. In many instances, information can be scattered or displayed in an unrelated format. Further, a user may not have the requisite background to comprehend information on a topic, or may need an understanding of only certain aspects related to a topic. The system and method described herein provide the technical solution of generating a learning map and objectively guiding a user toward attaining a skill by providing the user with a learning map based on his/her competency level. If a learning nugget from the learning map is missing or incorrect, a user may update the learning map to thus benefit the community of users that subscribe to the learning map. A user may begin a learning endeavor at any point in the learning map based on the user's competency level. The system and method also provide for rating and commenting on learning maps, which can be used in conjunction with other aspects by an analytics module for prediction of training needs for an organization, generation of trends, and identification of experts.

The learning device and method described herein include generation of learning maps and analysis of the generated learning maps to facilitate learning. A learning map may be defined as a community driven learning structure that a user may create and let evolve over time. The learning map may be comprised of learning nuggets that may include learning content, such as web links, podcasts, books, instructor led classroom sessions, eLearning courses, etc. A user may access a learning map based on a search topic and locate learning nuggets without having to perform searches on public search engines. The learning map may include attributes, such as user ratings for the learning map and/or user ratings for the learning nuggets that form the learning map. A learning map may also be associated with a skill or competency of a user. The skill or competency may be associated with different competency levels, such as, beginner, intermediate, or advanced. A creator of a learning map may start a learning map, and as the learning map evolves over time, other users may subscribe to, contribute to or add the learning map to their list of learning maps. Users may also customize a learning map to suit their needs. A creator or owner of a learning map may set levels of control for the map. For example, the levels of control may include public or private settings. For a private setting, the creator or owner of the learning map may accept or reject modifications to the learning map sent by users of the learning map. For a public setting, any user may modify the learning map without the creator's or owner's permission. The learning map may be created and used independently of a mode of creation or delivery thereof, any device used for creation or access to the learning map, or geography associated with the learning map.

The learning map provides a formal collaborative approach to sharing knowledge by experts as opposed to traditional methods of learning. The learning map also provides a formal method for identification of experts in an area by quantifying contributions and feedback by other subject-matter experts. The learning map provides an end user with the availability of an existing learning structure to attain a particular skill. In an organization environment, a learning map may be used to expedite attainment of employee competency, identification of knowledge leaders, and improvement of return on investment on learning investments.

In an example, a learning device may include a memory storing a module comprising machine readable instructions to create a learning map comprising one or more learning nuggets, and provide access to a user to the learning map for adding the learning map to a user's list of learning maps or contributing to the learning map. The machine readable instructions may further assign a public or private setting to the learning map to respectively allow the user to add the learning map to the user's list of learning maps or contribute to the learning map. The learning device may include a processor to implement the module.

In an example, a method for learning may include creating a learning map comprising one or more learning nuggets, and providing access to a user to the learning map for adding or contributing to the learning map. The method may further include assigning, by a processor, a public or private setting to the learning map to respectively allow the user to add or contribute to the learning map.

In an example, a non-transitory computer readable medium having stored thereon machine readable instructions for learning management is also described. The machine readable instructions that when executed may cause a computer system to receive a search term, access two or more learning maps comprising a plurality of learning nuggets, and sort, by a processor, the two or more learning maps based on relevance of the search term to meta tags associated with each of the learning maps.

### 2. System

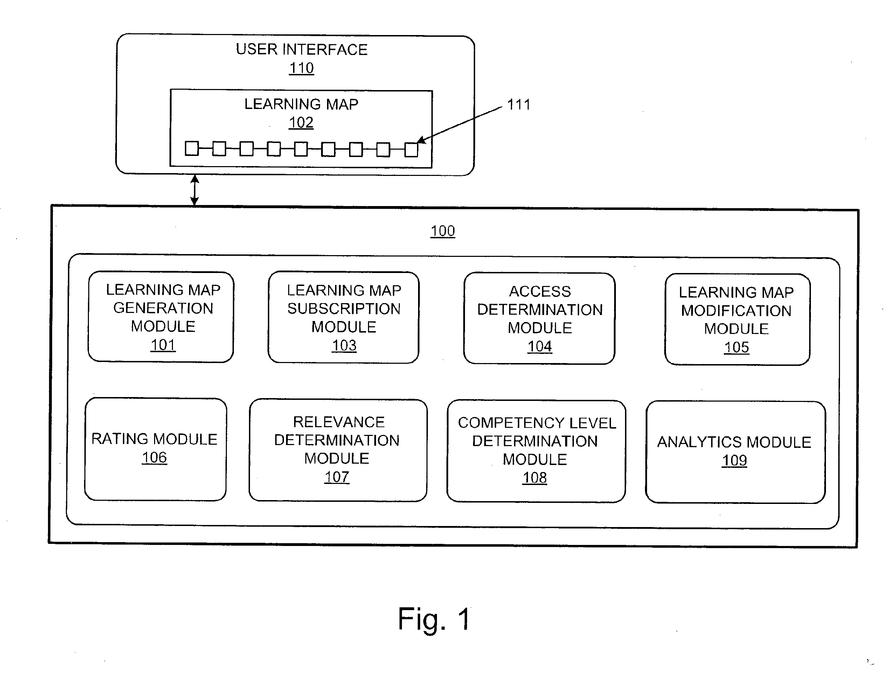

Figure 1 illustrates an architecture of a learning device 100 (which can be also referred to as a learning management system), according to an example of the present disclosure. The learning device 100 may generally include a learning map generation module 101 to automatically generate a learning map 102. The learning map generation module 101 may also provide for user-based generation of the learning map 102. For example, if a learning map is unavailable for a particular topic, a user may choose to automatically generate a learning map or generate a learning map based on user-based input. A learning map subscription module 103 is to control subscription of a user to the learning map 102. An access determination module 104 is to control access to the learning map 102. For example, the access determination module 104 is to control public or private access to the learning map 102. A learning map modification module 105 is to facilitate modification of the learning map 102, for example, based on the public or private access. A rating module 106 is to facilitate user-based rating of the learning map 102. A relevance determination module 107 is to determine relevance of the learning map 102, for example, by comparing a search topic with a list of meta tags associated with the learning map 102. A competency level determination module 108 is to determine a competency level requirement for a user of the learning map 102. An analytics module 109 is to determine various aspects related to the learning map 102, such as, prediction of training needs for an organization, generation of trends, and identification of experts. A user interface 110 is to facilitate operation of the foregoing modules, as well to provide an interface for input and display of information.

As described herein, the modules and other elements of the system 100 may comprise machine readable instructions stored on a non-transitory computer readable medium. In addition, or alternatively, the modules and other elements of the system 100 may comprise hardware or a combination of machine readable instructions and hardware.

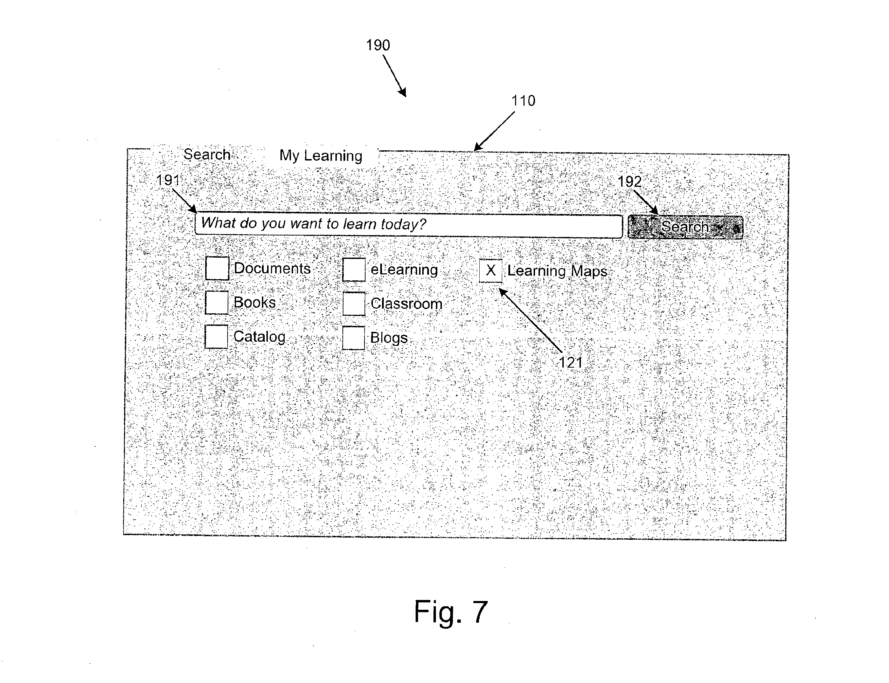

Referring to Figures 1, 2 and 7 the learning map generation module 101 may automatically generate the learning map 102, and further provide for user-based generation of the learning map 102. In order to automatically generate the learning map 102, a user 120 may access the learning device 100 by selecting option 121 (see Figure 7). At block 122, the user 120 may search for a learning map on a topic. For example, the user 120 may search for a learning map on wireless phone programming. At block 123, a determination is made whether a learning map is available. If a learning map is not available, at block 124, a determination is made for either an automatic or user-based generation of a learning map. At block 125, if the user selects automatic generation of a learning map, the learning map generation module 101 automatically generates a learning map. Alternatively, at block 126, based on user preferences, the user 120 may initiate user-based generation of a learning map. At block 125, the automatic generation of a learning map may be based, for example, on evaluation of search results for a particular topic. The search results may be based on an internet based search for a particular topic. Alternatively, the search results may be based on a user's intranet based search for a particular topic. For example, an automatically generated learning map may include entries from organizational resources, such as training databases, books, and knowledge repositories. The automatically generated learning map may also include entries from external resources, such as eLearning sites, search engines, and video sites. Examples of external resources may include EHOW, WIKIPEDIA, GOOGLE, and LYNDA. The learning map generation module 101 may match a search string (i.e., the search topic) for a learning map with a description and/or meta-tags of content (i.e., results of a search) being indexed. For example, the learning map generation module 101 may assign the highest priority to a match for a description and/or meta-tags that contain all words consecutively. The prioritization of matches in decreasing order may also be based on the sequence of the words (e.g., whether the description and/or meta-tags contain an exact sequence of words), whether the description and/or meta-tags contain all the words even if the words are not in sequence, and the type of content (i.e., in case of a match over multiple sites, certain learning sites may be preferred). For example, if a user searches for "HTML5 development" and there is no learning map that exists for this search string, the learning map generation module 101 may search organizational and/or external resources. The learning map generation module 101 may prioritize the search results as discussed above to generate a learning map. Any information on difficulty level determined by the competency level determination module 108 may be placed on the learning map in order of difficulty. The foregoing prioritized matches may be used as learning nuggets 111 or otherwise clustered to generate the learning nuggets. Continued generation of learning maps may also be used to train the learning map generation module 101 for generating new learning maps, and identifying competency levels and other aspects related to new learning maps.

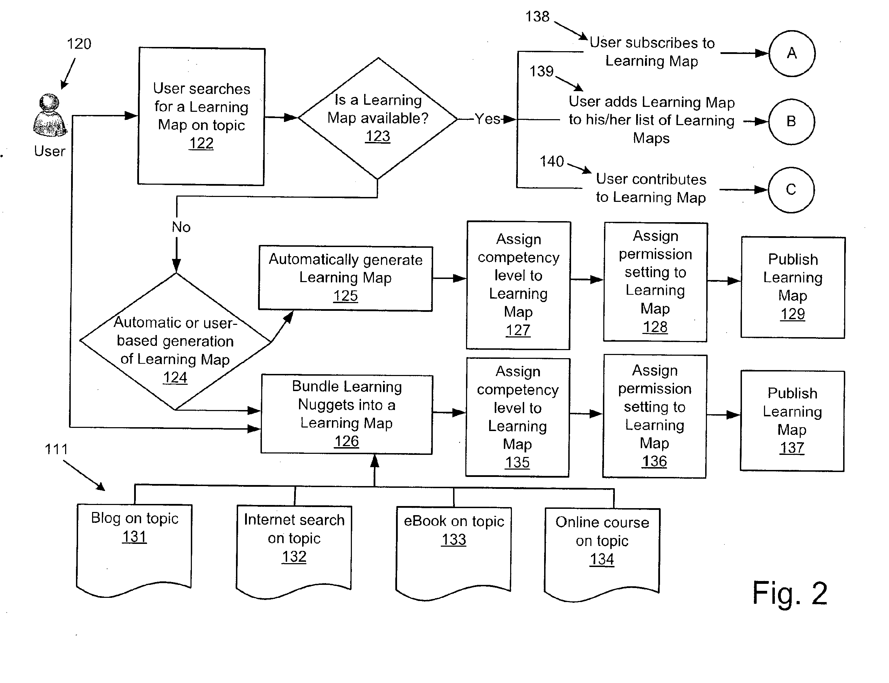

Referring to Figures 1 and 2, for automatic generation of a learning map, at block 127, the competency level determination module 108 may determine and assign a competency level for a user of the learning map 102. For example, the competency level determination module 108 may assign competency levels, such as, beginner, intermediate or advanced to the learning map 102. The competency levels may be assigned, for example, by evaluation of text in a learning nugget, meta data related to a learning nugget and/or the profile of a learning nugget author. At block 128, the access determination module 104 may assign permission settings to the learning map 102. For example, the access determination module 104 may assign permission settings, such as public or private to the learning map 102. The public and private settings may control access of other users to edit the learning map 102. For example, whereas a public setting may allow general public access and editing of a learning map, a private setting may limit editing access to a closed group of users. The public and private settings may also be assigned by a creator or owner of the learning map 102. At block 129, the learning map 102 may be published. For example, the learning map 102 may be displayed at the interface 110, or otherwise made available to other users on the internet or an organization specific intranet.

Referring to Figures 1 and 2, alternatively, if the user 120 initiates user-based generation of the learning map 102, at block 126, the user 120 may bundle learning nuggets into a learning map. For example, the user 120 may bundle two or more learning nuggets into a learning map associated with a competency level (i.e., beginner, intermediate or advanced). The learning map 102 may include the learning nuggets 111 related to blogs at block 131, internet search engine based results at block 132, eBook results at block 133, and online course based results at block 134. The learning nuggets 111 may be generally related to information obtained, for example, from web links, podcasts, books, instructor led classroom sessions, meetups, barcamps, eLearning courses, certification and forum based sources. For example, for the foregoing example of the learning map 102 related to wireless phone programming, the learning map 102 may include learning nuggets 111 related to blogs on wireless phone programming at block 131, internet search engine based results on wireless phone programming at block 132, eBook results on wireless phone programming at block 133, and online course based results on wireless phone programming at block 134.

Based on the learning nuggets 111, at block 126, the user 120 may bundle the learning nuggets 111 into the learning map 102. At block 135, the user 120 may further assign competency levels to the learning map 102. For example, the user 120 may assign competency levels, such as, beginner, intermediate or advanced to the learning map 102. At block 136, the user 120 may assign permission settings to the learning map 102. For example, the user 120 may assign permission settings, such as, public or private to the learning map 102. At block 137, the user 120 may publish the learning map. For example, the user 120 may display the learning map 102 at the interface 110, or otherwise, make the learning map 102 available to other users on the internet or an organization specific intranet.

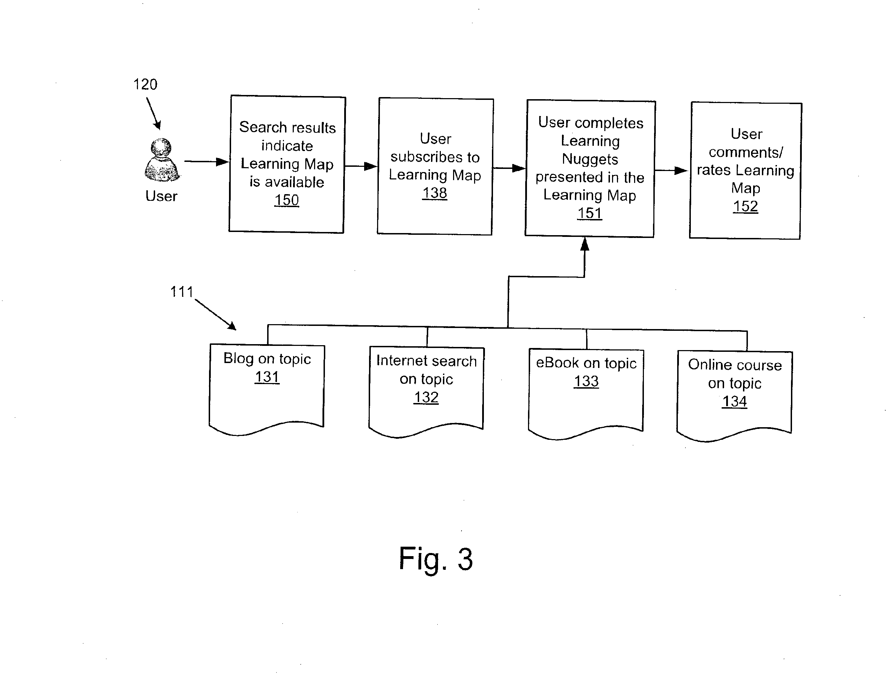

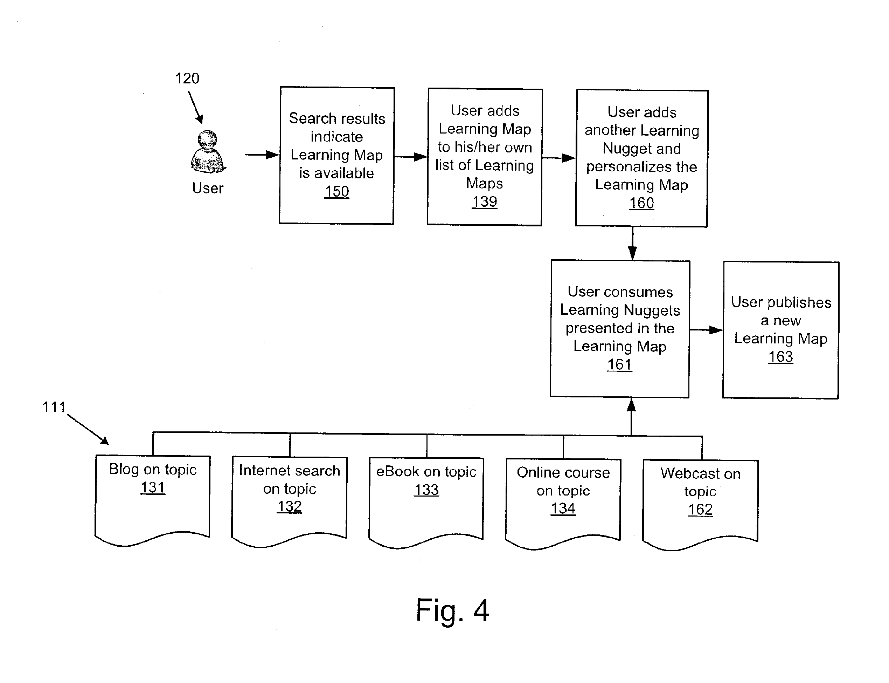

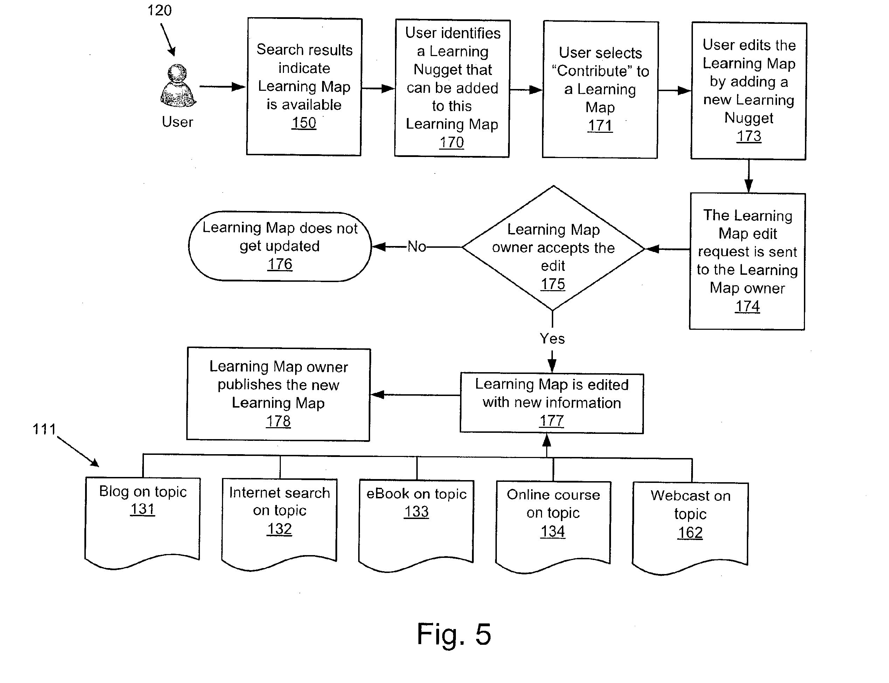

Referring to block 123, if a determination is made that a learning map is available for a given topic, at location 138, the user 120 may subscribe to the learning map 102, as described in further detail with reference to Figure 3. The learning map subscription module 103 may control subscription of a user to the learning map 102. At location 139, the user 120 may add the learning map 102 to his/her list of learning maps, as described in further detail with reference to Figure 4. At location 140, the user 120 may contribute to the learning map 102, as described in further detail with reference to Figure 5.

Referring to Figures 1-3, at location 138 of Figure 2, the user 120 may subscribe to the learning map 102. Referring to Figures 2 and 3, after a determination is made at block 123 that a learning map is available, the subscription to the learning map 102 proceeds by an indication at block 150 that a learning map is available. At block 151, the user 120 completes learning nuggets presented in the learning map 102. The learning map modification module 105 may be used in conjunction with the user interface 110 to complete the learning nuggets presented in the learning map 102. The learning nuggets may be completed based on information from blogs at block 131, internet search engine based results at block 132, eBook results at block 133, and online course based results at block 134. At block 152, the user 120 may comment and rate the learning map 102. For example, the rating module 106 may be used to enter user-based rating of the learning map 102.

Referring to Figures 1, 2 and 4, at location 139 of Figure 2, the user 120 may add a learning map to his/her list of learning maps. Referring to Figures 2 and 4, after a determination is made at block 123 that a learning map is available, the addition of the learning map 102 proceeds by an indication at block 150 that a learning map is available. At block 160, the user 120 may add another learning nugget 111 and personalize the learning map 102. At block 161, the user may consume the learning nuggets 111 presented in the learning map 102. For example, the learning nuggets 111 may be based on information related to blogs at block 131, internet search engine based results at block 132, eBook results at block 133, online course based results at block 134, and webcast based results at block 162 (i.e., the learning nugget added). At block 163, the user 120 may publish the new learning map 102. As discussed with reference to Figure 2, the access determination module 104 may assign permission settings, such as, public or private to the learning map 102. The public and private settings may control access of other users to add the learning map 102 to a user's list of learning maps or contribute to the learning map 102. Once a learning map is created, a user of the learning map may add the learning map to his/her list of learning maps if the creator or owner of the learning map has assigned a public setting.

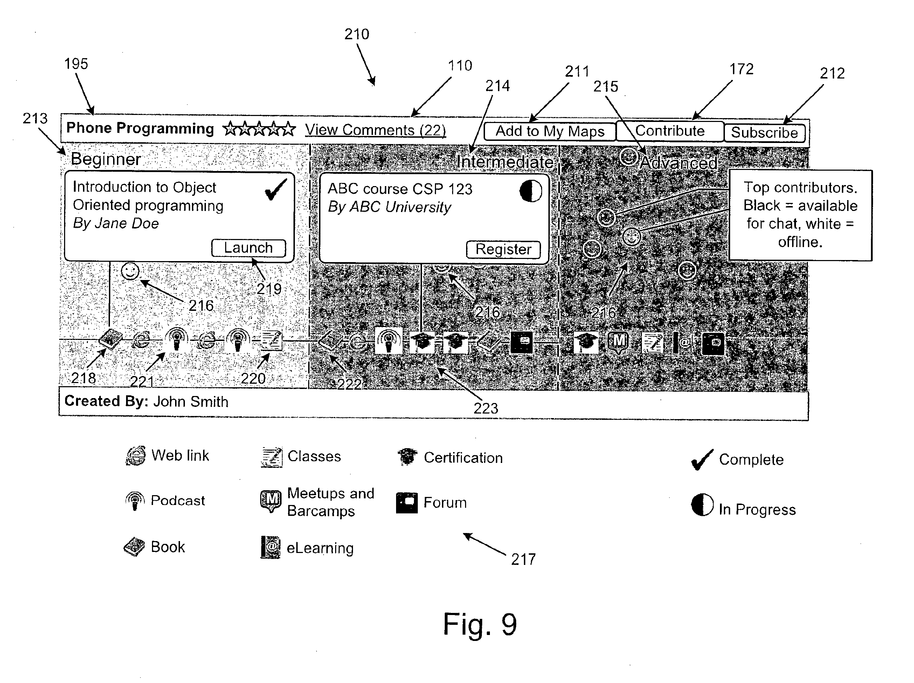

Referring to Figures 1, 2 and 5, at location 140 of Figure 2, the user 120 may contribute to the learning map 102. Referring to Figures 2 and 5, after a determination is made at block 123 that a learning map is available, contribution to the learning map 102 proceeds by an indication at block 150 that a learning map is available. At block 170, the user 120 may identify a learning nugget that can be added to the learning map 102. At block 171, the user 120 may select an option to contribute to the learning map 102. For example, referring to Figure 9, the user 120 may select the contribute option at 172 for the display at the interface 110. At block 173, the user 120 may edit the learning map 102 by adding a new learning nugget. In order to edit the learning map 102, at block 174, a learning map edit request may be sent to the owner of the learning map. At block 175, a determination is made if the owner of the learning map accepts the learning map edit request. If the owner of the learning map rejects the learning map edit request, at block 176, the learning map is not updated. Alternatively, if the owner of the learning map accepts the learning map edit request, at block 177, the learning map 102 is edited with new information. The new information may include information related to blogs at block 131, internet search engine based results at block 132, eBook results at block 133, online course based results at block 134, and webcast based results at block 162. At block 178, the owner of the learning map may publish the new learning map. As discussed with reference to Figure 2, the access determination module 104 may assign permission settings, such as, public or private to the learning map 102. The public and private settings may control access of other users to add the learning map 102 to a user's list of learning maps or contribute to the learning map 102. Once a learning map is created, a user of the learning map may contribute to the learning map if the creator of the learning map has assigned a private setting.

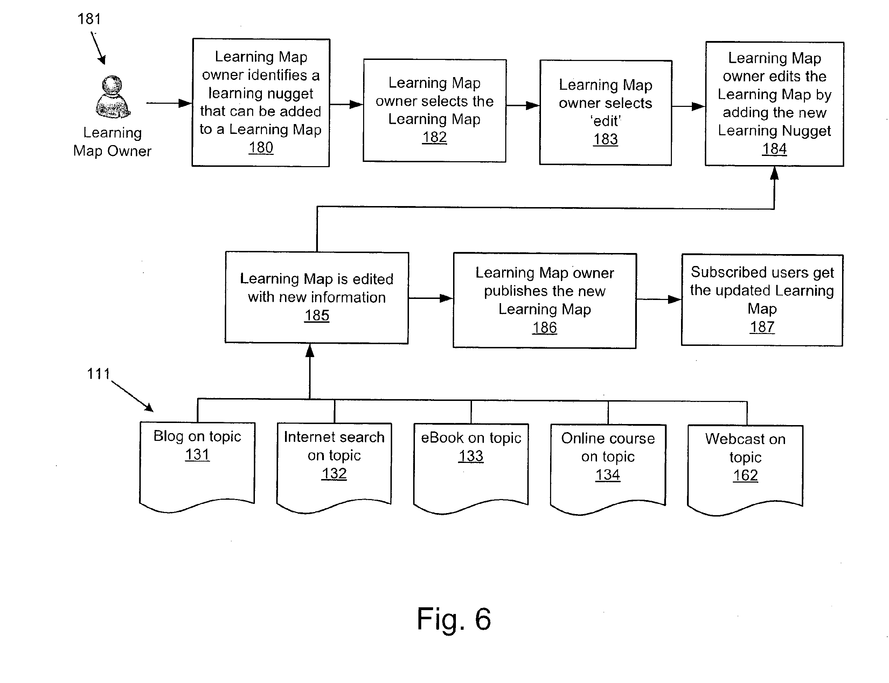

Referring to Figures 1 and 6, a flowchart for editing a learning map is illustrated. The learning map modification module 105 may facilitate modification (i.e., editing) of learning maps. In order to edit a learning map, at block 180, a learning map owner 181 may identify a learning nugget that can be added to a learning map. At block 182, the learning map owner 181 may select the learning map to be edited. At block 183, the learning map owner 181 may select an option on the user interface 110 to edit the learning map. At block 184, the learning map owner 181 may edit the learning map, for example, by adding the new learning nugget identified at block 180. At block 185, the learning map may be edited with new information. For example, the new information may include information related to blogs at block 131, internet search engine based results at block 132, eBook results at block 133, online course based results at block 134, and webcast based results at block 162. At block 186, the learning map owner 181 may publish the new learning map. At block 187, users that are subscribed to the learning map may receive the updated learning map.

Referring to Figures 1 and 7, a display 190 for the user interface 110 for initiating access to learning maps is shown. The display 190 may allow the user 120 to access the learning device 100 by selecting option 121. The display 190 may also include options for selecting specific sources, such as documents, books, catalogs, eLearning courses, instructor led classroom sessions or blogs. A user may enter a search topic at location 191 and initiate display, generation or other features of a learning map by selecting option 192.

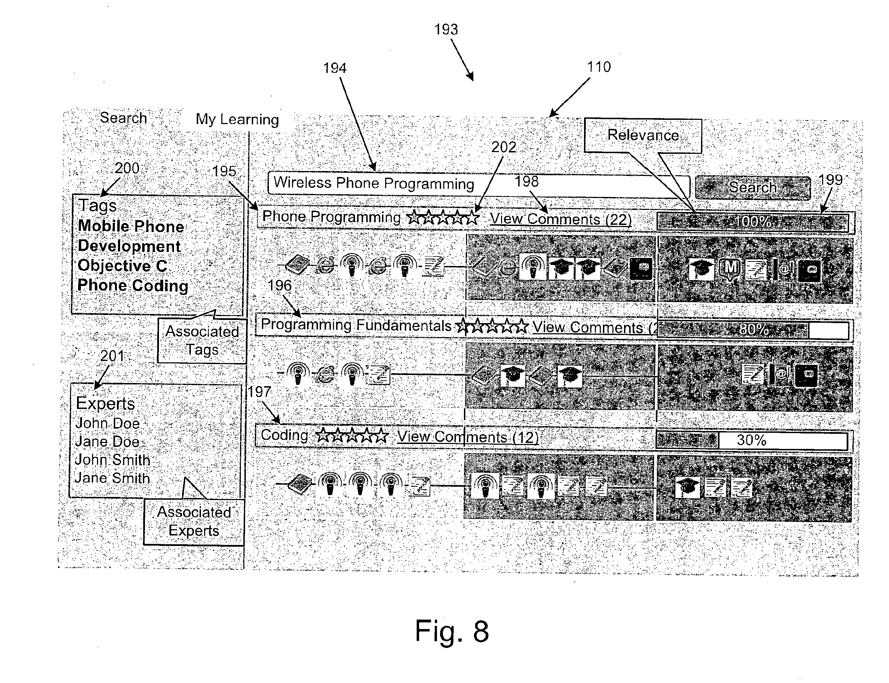

Referring to Figures 1 and 8, a display 193 for the user interface 110 based on a search topic is shown. For example, the search topic at 194 for Figure 8 may be related to wireless phone programming. Based on the search topic at 194, learning maps 195-197 may be displayed. The learning maps 195-197 may include related comments at 198, and relevance scores (e.g., percentages) at 199. The relevance determination module 107 may determine relevance of the learning maps 195-197, for example, by comparing the search topic at 194 with a list of meta tags associated with each learning map. For example, the search topic at 194 may be compared with meta tags 200 associated with the learning map 195. More specifically, the relevance determination module 107 may determine relevance by first obtaining a set of related words for each learning map and node (i.e., learning nugget or cluster of learning nuggets) for the learning map. The related words may be generated and obtained from the creator of the learning map. The relevance determination module 107 may compile and maintain a map of related words in a database for all learning maps. When a user searches for a specific topic, the relevance determination module 107 may search for learning maps by searching the title of the learning map, keywords in the description of the learning map, and associated keywords. The relevance determination module 107 may prioritize the search by assigning the highest priority to the title of the learning map, and lower priorities to keywords in the description of the learning map, and associated keywords. For example, if a creator of a learning map "Phone Programming" associates the keywords "phone" "development" and "mobile" with the learning map, and a creator of a learning map "C++ Programming" associates the keywords "object oriented", "development" and "mobile" with the learning map, then for a search for "Wireless Phone Programming", the relevance determination module 107 shows learning map "Phone Programming" at a higher relevance because the title of the learning map matches the search string, even though the keywords for the two learning maps are similar.

Based on the determined relevance of each learning map, the associated learning maps may be sorted and displayed in a chronological order as shown in Figure 8. For example, the learning map associated with "Phone Programming" may be displayed at the highest level based on 100% relevancy determination. For the display 193, associated experts may be displayed at 201. The display 193 may also include a star rating at 202 based on a combination of factors, such as, relevance, comments etc. The star rating at 202 may be automatically determined by the rating module 106 based on a weighting of factors, such as positive and negative comments, number of subscribed users, and number of comments. Alternatively, the star rating at 202 may be entered as a user-based rating. For the user-based rating, a user, other than the creator or another user that has added the learning map to his/her list of learning maps or contributed to the learning map, may rate the learning map. For example, as discussed with reference to Figure 3, a subscribing user of a learning map may comment on and/or rate a learning map.

Referring to Figures 1, 8 and 9, a graphical display 210 for the user interface 110 for the learning map 195 is shown. For example, referring to Figure 8, if the learning map 195 for "Phone Programming" is selected, the user 120 may have the option to add the learning map 195 to his/her list of learning maps at 211, as discussed with reference to Figures 2 and 4. At 172, the user 120 may contribute to the learning map 195, as discussed above with reference to Figures 2 and 5. At 212, the user 120 may subscribe to the learning map 195, as discussed above with reference to Figures 2 and 3. The learning map 195 may be separated into user competency level based learning maps. For example, the competency level determination module 108 may determine and assign a competency level for each user competency level based learning map. For example, the competency level determination module 108 may assign competency levels, such as, beginner, intermediate and advanced, respectively to beginner, intermediate and advanced competency level based learning maps 213-215, that are part of the learning map 195. Alternatively, the competency levels may be assigned by a user or the owner of the learning map 195. A competency level may be determined, for example, by evaluating information related to competency requirement for learning nuggets, keyword matches in learning nuggets, skill requirements for competency levels and/or input from the creator or owner of a learning map. If no information is available, the competency level determination module 108 may assign a default competency level of beginner. Once a competency level for a learning map is set, users of the learning map may recommend changes to the competency level. If a sufficient number of users have recommended a different competency level, the creator or owner of the learning map may be notified and provided the option to change the competency level. The notification to the creator or owner of the learning map may be based on predetermined parameters that trigger a notification. For example, if at least 10% of private users recommend a change in competency level, a notification to the creator or owner of the learning map may be triggered. Also, if at least 50% of all users recommend a change in competency level, a notification to the creator or owner of the learning map may be triggered.

With continued reference to Figures 1, 8 and 9, contributors to the learning map 195 may also be displayed at 216 for each competency level. Available and offline contributors may be displayed, for example, using a color scheme. For the learning map 195, the various types of learning nuggets may be displayed at 217 and provide a user with a linear mode of learning a particular topic. The associated description for the learning nuggets 217 may also be provided as shown. By clicking on a learning nugget, a user may obtain a further description of the learning nugget. For example, for the beginner competency level based learning map 213, a user may begin the learning endeavor by clicking on the book icon at 218 and launch the learning nugget by selecting option 219. To complete the learning endeavor, the user may select further learning nuggets in a linear manner along the learning path toward learning nugget 220 (i.e., the final learning goal) to thus obtain beginner level information on the associated topic. The intermediate learning nuggets, such as learning nugget 221, may be designated as learning sub-goals. In the same manner, the user may access the intermediate or advanced competency level based learning maps at 214, 215 and proceed with the learning endeavor accordingly. A user may also skip nodes that the user has knowledge of and start from a subsequent node. Related learning maps that are possible alternatives to a learning map that is searched for may also be referenced (i.e., identified by a notification to a user) as related or alternate learning maps.

Referring to Figures 1, 8 and 9, while the learning map 195 is shown as including a linear path format, for example, from the learning nuggets 218 to 220, if the learning map includes alternate paths (i.e., a non-linear format), such paths may be represented in the same or a separate learning map. For example, the learning map 195 may include alternate vertical or otherwise angled learning paths from any of the learning nuggets. For example, instead of separate competency level based learning maps for beginner, intermediate and advanced competency users, learning nugget 222 and the associated intermediate competency level learning path 223 may be connected to an appropriate learning nugget (e.g., learning nugget 221) of the beginner competency level based learning map 213 to create an alternate learning path. In such a combined competency level learning map, a user may also click on a learning nugget belonging to an alternate learning path and be directed to a new learning map. The new learning map may include the same or different sub-goals and/or final learning goal as the original learning map. In this manner, different learning maps for different competency levels may be combined into a single or reduced number of learning maps. The single or reduced number of learning maps may include a plurality of nodes (i.e. learning nuggets) and learning paths to an end goal, with the learning paths being displayed using different colors or other formats based on users' competency levels. In this manner, a user may choose the desired learning path(s), competency level(s) and node(s) to achieve a learning goal using a single learning map or a reduced number of learning maps. The combined learning map may also include a plurality of learning nuggets and learning paths disposed in a non-linear format, with different learning nuggets representing beginnings of learning paths, and a common end learning nugget representing an end of the learning paths. Further, based on a user's selection of nodes, the various paths and nodes along a path in a learning map may be highlighted to illustrate to a user a recommended path for reaching the final learning goal node. For example, if a user selects a learning node in an alternate path that has a beginner competency level, the path towards the final learning goal node that is highlighted may be different than an alternate path that has an intermediate competency level. In this manner, the user may be graphically shown how to achieve a learning goal regardless of which node or learning path is selected on a combined learning map including multiple alternate learning paths. Moreover, if one of the learning nuggets in an alternate path is problematic, a user may readily choose an alternate path to reach a final learning goal.

Referring to Figure 1, with regard to analytics, the analytics module 109 is to determine various aspects related to a learning map, such as, prediction of training needs, for example, for an organization, generation of trends, and identification of experts. With regard to prediction of training needs, for example, for an organization, and generation of trends, for example, related to what users are learning, the analytics module 109 may evaluate parameters, for example, related to trends of topics, percentage of available experts, and audience count. For example, in order to predict training needs for an organization and generate trends, the analytics module 109 may evaluate learning map topics to determine the top trending topics. The analytics module 109 may also evaluate a percentage of experts available for a top trending topic compared to a total user count. A user count for a topic may include everyone who has contributed to or commented on the topic. The analytics module 109 may also evaluate user count for a topic to predict training needs for an organization. For example, in order to predict training needs for an organization and generate trends, the analytics module 109 may set parameters of at least a minimum number of comments (e.g., 100) for a topic for a topic to be designated a top trending topic. The parameters may further include a minimum percentage (e.g., 10%) for experts, and a minimum count (e.g., 5000) of active users that have contributed to or commented on a topic within a time period (e.g., six months). For example, based on the foregoing parameters, for a topic "Phone Programming" (e.g., learning map 195 of Figure 9) that has at least 100 comments and 6000 active users, if the number of experts on the topic are less than 10%, then an organization may provide additional training on such a topic to improve one or more of the foregoing parameters (e.g., increase the number of experts to above 10%).

In order to identify experts, the analytics module 109 may evaluate parameters, for example, related to viewing of comments, rating of comments, reader profiles and sharing of comments. For example, the analytics module 109 may evaluate a number of times a user's comment has been viewed, or a number of times a user's comment has been rated positively. The analytics module 109 may further evaluate a profile of a user who has rated a learning map, and a number of times a user's comment has been shared. For example, in order to identify experts, the analytics module 109 may set parameters of a minimum number of views (e.g., 25 minimum views or 10% of active users), and a minimum percentage (e.g., 50%) of views resulting in a positive rating. The analytics module 109 may further set parameters of a minimum percentage (e.g., 10%) of raters that are an expert in at least one area, and a minimum percentage (e.g., 25%) of viewers that should have shared a comment. For example, based on the foregoing parameters, for a learning map related to the topic "Phone Programming" (e.g., learning map 195 of Figure 9) that has 6000 active users, and has been viewed 500 times, rated by 50 experts, rated positively by 300 users and 40 raters are experts in an area, even though the positive rating exceeds 50% (i.e., 100*(300/500)), the percentage of raters that are experts in an area exceeds 10% (i.e., 100*(40/300)), and the learning map has been viewed by at least 25 active users (i.e., 500 active users), since the learning map has been shared by less than 25% (i.e., 100*(100/500)) of the viewers, the creator of the learning map would not be identified as an expert. Thus, based on the foregoing example parameters, the analytics module 109 may identify experts.

### 3. Method

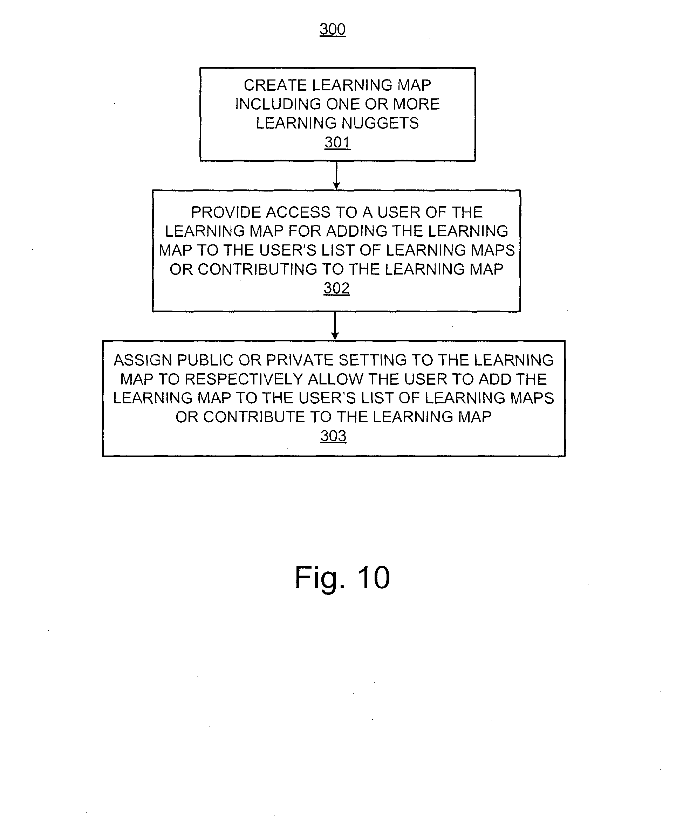

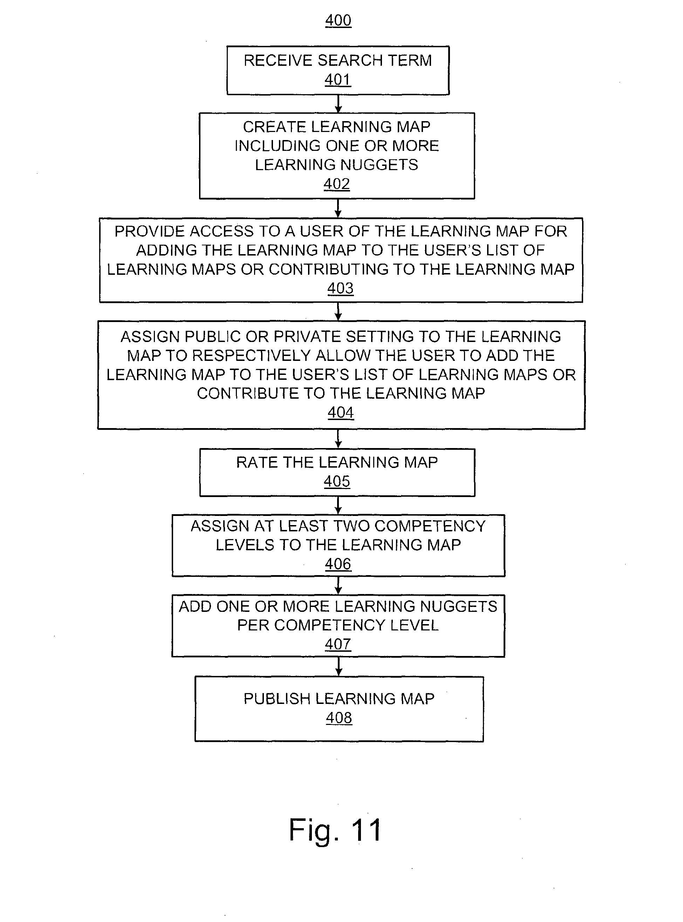

Figures 10 and 11 illustrate flowcharts of methods 300 and 400 for learning (which can be also referred to as methods for learning management), according to examples. The methods 300 and 400 may be implemented on the learning device described above with reference to Figures 1-9 by way of example and not limitation. The methods 300 and 400 may be practiced in other systems.

Referring to Figure 10, at block 301, a learning map including one or more learning nuggets is created. For example, referring to Figure 1, the learning map generation module 101 may automatically generate the learning map 102. The learning map generation module 101 may also provide for user-based generation of the learning map 102. For example, if a learning map is unavailable for a particular topic, a user may choose to automatically generate a learning map or generate a learning map based on user-based input.

At block 302, a user is provided access to the learning map for adding the learning map to the user's list of learning maps or contributing to the learning map. For example, referring to Figure 1, the access determination module 104 controls access to the learning map 102.

At block 303, a public or private setting is assigned to the learning map to respectively allow the user to add the learning map to the user's list of learning maps or contribute to the learning map. For example, referring to Figure 1, the access determination module 104 controls public or private access to the learning map 102. The learning map modification module 105 facilitates modification of the learning map 102, for example, based on the public or private access. For example, referring to Figure 2, at block 123, if a determination is made that a learning map is available for a given topic, at location 138, the user 120 may subscribe to the learning map 102, as described with reference to Figure 3. At location 139, the user 120 may add the learning map 102 to his/her list of learning maps, as described with reference to Figure 4. At location 140, the user 120 may contribute to the learning map 102, as described with reference to Figure 5.

Referring to Figure 11, for the method 400, at block 401, a search term is received. For example, referring to Figure 1, the user interface 110 may be used to receive a search term.

At block 402, a learning map including one or more learning nuggets is created. The learning map may include a plurality of learning nuggets disposed in a linear format, with the learning nuggets including a first learning nugget representing a beginning of a learning path, one or more intermediate learning nuggets representing a learning sub-goal of the learning path, and a last learning nugget representing a final learning goal of the learning path. Alternatively, the learning map may include a plurality of learning nuggets and learning paths disposed in a non-linear format, with the learning nuggets including different learning nuggets representing beginnings of the learning paths, and a common end learning nugget representing an end of the learning paths. The learning map may also guide the user through the learning map by highlighting a path toward the common end learning nugget. The learning map may be created based on comparison of the search term with consecutively disposed words in a description of the learning nugget(s), a sequence of words in the learning nugget(s), and/or a number of matching words in the learning nugget(s).

At block 403, a user is provided access to the learning map for adding the learning map to the user's list of learning maps or contributing to the learning map. The user may also be providing access to the learning map for adding or contributing to the learning map.

At block 404, a public or private setting is assigned to the learning map to respectively allow the user to add the learning map to the user's list of learning maps or contribute to the learning map. The public or private setting may also be assigned to the learning map to respectively allow the user to add or contribute to the learning map.

At block 405, the learning map is rated. For example, referring to Figure 1, the rating module 106 may be used for user-based rating of the learning map 102.

At block 406, two or more competency levels are assigned to the learning map. For example, referring to Figure 1, the competency level determination module 108 may determine a competency level requirement for a user of the learning map 102. The competency levels may be assigned based on an evaluation of text in the learning nugget(s), meta data related to the learning nugget(s), and/or a profile of an author of the learning nugget(s).

At block 407, one or more learning nuggets are added per competency level. For example, referring to Figure 9, a plurality of learning nuggets are shown for the beginner, intermediate and advanced competency level based learning maps 213-215.

At block 408, the learning map is published. For example, referring to Figures 8 and 9, the learning map 102 may be displayed at the interface 110, or otherwise made available to other users on the internet or an organization specific intranet. For multiple learning maps displayed, the learning maps may be sorted based on relevance of the search term to meta tags associated with each of the learning maps. For example, the learning maps may be sorted based on comparison of the search term with titles of the learning maps, and/or keywords associated with the learning maps.

### 4. Computer Readable Medium

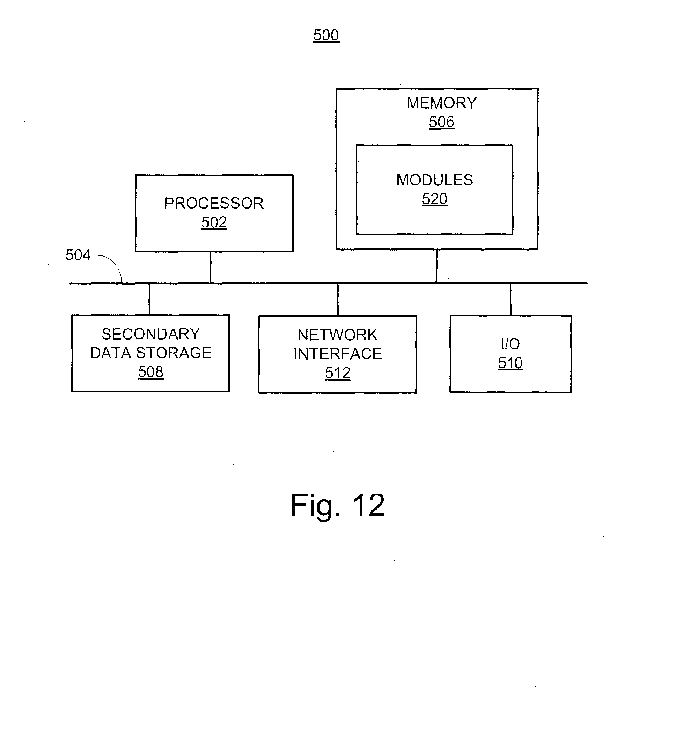

Figure 12 shows a computer system 500 that may be used with the examples described herein. The computer system 500 represents a generic platform that includes components that may be in a server or another computer system. The computer system 500 may be used as a platform for the system 100. The computer system 500 may execute, by a processor or other hardware processing circuit, the methods, functions and other processes described herein. These methods, functions and other processes may be embodied as machine readable instructions stored on computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 500 includes a processor 502 that may implement or execute machine readable instructions performing some or all of the methods, functions and other processes described herein. Commands and data from the processor 502 are communicated over a communication bus 504. The computer system 500 also includes a main memory 506, such as a random access memory (RAM), where the machine readable instructions and data for the processor 502 may reside during runtime, and a secondary data storage 508, which may be non-volatile and stores machine readable instructions and data. The memory and data storage are examples of computer readable mediums. The memory 506 may include modules 520 including machine readable instructions residing in the memory 506 during runtime and executed by the processor 502. The modules 520 may include the modules of the system 100 described with reference to Figures 1-9.

The computer system 500 may include an I/O device 510, such as a keyboard, a mouse, a display, etc. The computer system 500 may include a network interface 512 for connecting to a network. Other known electronic components may be added or substituted in the computer system 500.

What has been described and illustrated herein are examples along with some of their variations. The terms, descriptions and figures used herein are set forth by way of illustration only and are not meant as limitations. Many variations are possible within the spirit and scope of the subject matter, which is intended to be defined by the following claims and their equivalents in which all terms are meant in their broadest reasonable sense unless otherwise indicated.

## Claims

1. A learning device for facilitating learning by at least one user, the device comprising:
at least one learning map comprising at least one learning nugget; and
the at least one learning nugget includes learning content associated with the learning map and with a search term for a search performable by a user to access the learning map,
wherein the user interacts with the learning map to
add the learning map to a user's list of learning maps or contribute to the learning map; and
assign a public or private setting to the learning map to respectively allow the user to add the learning map to the user's list of learning maps or contribute to the learning map.

2. The learning device of claim 1, wherein the learning map includes a plurality of learning nuggets disposed in a linear format, the learning nuggets include a first learning nugget representing a beginning of a learning path, at least one intermediate learning nugget representing a learning sub-goal of the learning path, and a last learning nugget representing a final learning goal of the learning path.

3. The learning device of claim 1 or 2, wherein the learning map includes a plurality of learning nuggets and learning paths disposed in a non-linear format, the learning nuggets include different learning nuggets representing beginnings of the learning paths, and a common end learning nugget representing an end of the learning paths;
the device preferably further comprising a user interface to:
guide the user through the learning map by highlighting a path toward the common end learning nugget.

4. The device of any one of the preceding claims, further comprising a learning map generation module to:
receive the search term; and
create the learning map based on comparison of the search term with at least one of:
consecutively disposed words in a description of the at least one learning nugget,
a sequence of words in the at least one learning nugget, and
a number of matching words in the at least one learning nugget.

5. The device of any one of the preceding claims, wherein the learning nugget is based on an information source including at least one of a web link, podcast, book, instructor led classroom session, meetup, barcamp, eLearning course, certification and forum.

6. The device of any one of the preceding claims, further comprising a rating module to:
rate the learning map.

7. The device of any one of the preceding claims, further comprising a competency level determination module to:
assign at least two competency levels to the learning map; and
add at least one learning nugget per competency level;
wherein the competency level determination module is preferably further to:
modify one of the competency levels associated with the learning map by evaluating a number of users that have recommended a different competency level; wherein the competency level determination module is preferably further to:
assign the competency levels based on an evaluation of at least one of:
text in the at least one learning nugget,
meta data related to the at least one learning nugget, and
a profile of an author of the at least one learning nugget.

8. The device of any one of the preceding claims, further comprising a relevance determination module to:
receive the search term; and
sort at least two learning maps based on relevance of the search term to meta tags associated with each of the learning maps;
and/or to:
receive the search term; and
sort at least two learning maps based on comparison of the search term with at least one of:
titles of the learning maps, and
keywords associated with the learning maps.

9. The device of any one of the preceding claims, further comprising an analytics module to:
determine training needs for an organization by evaluating at least one of:
a number of comments for the learning map,
a number of experts associated with the learning map, and
a number of users associated with the learning map;
and/or to:
identify an expert associated with the learning map by evaluating at least one of:
a number of users that view a comment for the learning map,
a number of positive ratings for the learning map,
a profile of the users, and
a number of the users that share the comment.

10. The device of any one of the preceding claims, further comprising an access determination module to:
prompt an owner of the learning map to accept or decline contribution to the learning map if the learning map is assigned the private setting.

11. A method for facilitating learning by at least one user, the method comprising:
providing at least one learning map comprising at least one learning nugget, wherein the at least one learning nugget includes learning content associated with the learning map and with a search term for a search performable by a user to access the learning map,
providing a user interface for the user to interact with the learning map to
add the learning map to a user's list of learning maps or contribute to the learning map; and
assign a public or private setting to the learning map to respectively allow the user to add the learning map to the user's list of learning maps or contribute to the learning map.

12. The method of claim 11, further comprising:
receiving the search term; and
creating the learning map based on comparison of the search term with at least one of:
consecutively disposed words in a description of the at least one learning nugget,
a sequence of words in the at least one learning nugget, and
a number of matching words in the at least one learning nugget.

13. The method of claim 11 or 12, further comprising:
assigning at least two competency levels to the learning map; and
adding at least one learning nugget per competency level.

14. The method of any one of claims 11 to 13, further comprising:
receiving the search term; and
sorting at least two learning maps based on relevance of the search term to meta tags associated with each of the learning maps.

15. Computer program product comprising computer readable instructions, which when loaded and run in a computer system, causes the computer system to perform operations according to a method of any one of claims 11 to 14.
